# EUROPEAN PATENT APPLICATION

(11) **EP 1 850 345 A2**
(43) Date of publication of application: **31.10.2007**
(21) Application number: 07251701.4
(22) Date of filing: 23.04.2007
(51) Int. Cl.: G11B 27/034

(54) **Optical disk reproducing apparatus having content editing function**

(30) Priority: 27.04.2006 JP 2006123737
(71) Applicant: ORION ELECTRIC CO., Ltd., Fukui 915-8555 (JP)
(72) Inventor: Hayashi, Hirotaka, Fukui 915-8555 (JP)
(74) Representative: Paget, Hugh Charles Edward

(57) **Abstract**

To enable editing of contents even in a play-only optical disk reproducing apparatus. An optical disk reproducing apparatus 1 includes a data editing means 61 and a nonvolatile memory 7, wherein editing of a reproducing order of a video object 2c of an optical disk medium 2 is stored in the nonvolatile memory 7, so that next time the same disk is set to be reproduced, the video object 2c is reproduced not based on a management information 2a and an address reference information 2b stored in the optical disk medium 2 but based on an edited management information and address information 71 for the optical disk medium 2 stored in the nonvolatile memory 7.

## Description

### BACKGROUND OF THE INVENTION

### Field of the Invention

The present invention relates to an optical disk reproducing apparatus having a content editing function enabling the user to edit contents stored in an optical disk even in an optical disk device only having a reproducing function.

### Description of the Related Art

The prior art optical disk reproducing apparatuses such as CD (compact disk) players and DVD (digital versatile disk) players, especially play-only apparatuses, had drawbacks in that the editing of contents stored in a disk, such as the editing of video image, could not be performed since data could not be written on the disks.

Japanese Patent Application Laid-Open Publication No. 2004-362682 (patent document 1) solves this problem by providing an information processing apparatus for editing track management information stored in a storage medium, storing the edited track management information on a removable memory, and upon reproducing the storage medium again, reproducing the medium based on the track management information stored in the removable memory.

Further, Japanese Patent Application Laid-Open Publication No. 2004-79085 (patent document 2) discloses a disk reproducing apparatus capable of editing a disk management data stored in the optical disk and storing the same in a separately disposed data storage means, so that when the optical disk is used again, the apparatus provides a function to create an operation screen that can easily be operated by the user.

However, it was difficult to apply the method disclosed in patent document 1 to a DVD medium having a complex management information, and the method disclosed in patent document 2 enabled to change the operation screen but did not enable to arbitrarily edit the reproducing order of contents.

### SUMMARY OF THE INVENTION

The present invention aims at solving the problems of the prior art by providing an optical disk reproducing apparatus having a content editing function that enables to edit data in a more flexible manner.

The optical disk reproducing apparatus having a content editing function according to aspect 1 of the invention comprises a disk unit for reading or reading and writing data on an optical disk medium storing one or more content data, a management information including a title menu of the content data, and an address reference information designating a given point of the content data; a data acquisition means for acquiring the management information, the content data and the address reference information stored in the optical disk medium set in the disk apparatus; a data editing means for performing editing operation of the acquired management information, content data and address reference information; and a nonvolatile recording means for recording the management information and the address reference information edited by the data editing means; wherein the data editing means edits the address reference information acquired by the data acquisition means so as to change a reproducing order of the content data or partially delete the content data, and stores the edited address reference information to the nonvolatile storage means, so that when the optical disk medium is reproduced after the editing operation, the reproducing order of the content data is determined by the reproducing order according to the edited address reference information stored in the nonvolatile storage means.

According to the arrangement of aspect 1, the address reference information indicating which portion of the content data to reproduce, which is required for reproducing the content data is stored in a nonvolatile storage means, and the address reference information is then edited, so that when the same optical disk medium is reproduced again, the content data stored in the optical data can be reproduced not based on the address reference information stored in the optical disk medium but based on the edited address reference information stored in the nonvolatile storage means.

The optical disk reproducing apparatus having a content editing function according to aspect 2 relates to the optical disk reproducing apparatus having a content editing function according to aspect 1, wherein the data editing means stores a copy of the address reference information to the nonvolatile recording means upon editing the address reference information stored in the optical disk medium, and performs editing operation of the copy of the address reference information.

According to the arrangement of aspect 2, upon editing the address reference information, the address reference information is copied to the nonvolatile storage means, and the editing operation is performed to this copy.

The optical disk reproducing apparatus having a content editing function according to aspect 3 relates to the optical disk reproducing apparatus having a content editing function according to aspect 1 or aspect 2, wherein the data editing means stores the difference between the address reference information stored in the optical disk medium and the edited address reference information to the nonvolatile storage means.

According to the arrangement of aspect 3, upon storing the edited address reference information to the nonvolatile recording means, the portion being actually recorded is restricted to the difference between the address reference information stored in the optical disk medium, so that the recording capacity of the nonvolatile recording means to be used can be suppressed to a minimum.

The optical disk reproducing apparatus having a content editing function according to aspect 1 comprises a disk unit for reading or reading and writing data on an optical disk medium storing one or more content data, a management information including a title menu of the content data, and an address reference information designating a given point of the content data; a data acquisition means for acquiring the management information, the content data and the address reference information stored in the optical disk medium set in the disk apparatus; a data editing means for performing editing operation of the acquired management information, content data and address reference information; and a nonvolatile recording means for recording the management information and the address reference information edited by the data editing means; wherein the data editing means edits the address reference information acquired by the data acquisition means so as to change a reproducing order of the content data or partially delete the content data, and stores the edited address reference information to the nonvolatile storage means, so that when the optical disk medium is reproduced after the editing operation, the reproducing order of the content data is determined by the reproducing order according to the edited address reference information stored in the nonvolatile storage means; so that the user can edit the contents to a desired order even in a play-only optical disk reproducing apparatus, and upon reproducing the optical disk, the content data can be reproduced based on the stored edited reproducing order.

The optical disk reproducing apparatus having a content editing function according to aspect 2 relates to the optical disk reproducing apparatus having a content editing function according to aspect 1, wherein the data editing means stores a copy of the address reference information to the nonvolatile recording means upon editing the address reference information stored in the optical disk medium, and performs editing operation of the copy of the address reference information; so that the editing operation can be performed based on the address reference information stored in the optical disk medium, and upon redoing the editing operation, the address reference information stored in the optical disk medium can be copied again to initialize the editing operation, by which the editing operation is simplified.

The optical disk reproducing apparatus having a content editing function according to aspect 3 relates to the optical disk reproducing apparatus having a content editing function according to aspect 1 or aspect 2, wherein the data editing means stores the difference between the address reference information stored in the optical disk medium and the edited address reference information to the nonvolatile storage means; so that the storage capacity of the nonvolatile storage means required for storing the edited address reference information can be suppressed to a minimum.

### BRIEF DESCRIPTION OF THE DRAWINGS

FIG. 1 is a block diagram showing the configuration of an optical disk reproducing apparatus according to a preferred embodiment of the present invention;
FIG. 2 is a block diagram showing the configuration of an optical disk reproducing apparatus for reproducing an edited optical disk medium according to the same;
FIG. 3 is an explanatory view of the directory structure stored in the optical disk medium according to the same;
FIG. 4 is an explanatory view showing the data structure of a VR_MANGR.IFO which is a management information file stored in the optical disk medium according to the same;
FIG. 5 is an explanatory view showing the data structure of a VR_MANGR.IFO which is a management information file stored in the optical disk medium according to the same;
FIG. 6 is an explanatory view showing the data structure of an ORG_PGCIT which is one of the tables of information contained in VR_MANGR.IFO according to the same;
FIG. 7 is an explanatory view showing an address flow of a program constituting a content refering to a video object according to the same;
FIG. 8 is an explanatory view of the data structure of ORG_PGCIT showing the state in which a program and cells to be deleted is selected upon deleting a content in program units according to the same;
FIG. 9 is an explanatory view of the data structure of ORG_PGCIT showing the state in which the program and cells selected in FIG. 8 are deleted according to the same;
FIG. 10 is an explanatory view of the data structure of ORG_PGCIT showing the state in which programs and cells are rearranged after deleting is performed as shown in FIG. 9 according to the same;
FIG. 11 is an explanatory view of the data structure of ORG_PGCIT showing a method for storing differential data of the program and cells to be deleted according to the same;
FIG. 12 is an explanatory view of the data structure of ORG_PGCIT showing the state in which information denoting that deleting has been performed is added to the edited program according to the same;
FIG. 13 is an explanatory view of a data structure of a program showing a method for deleting cell units according to the same;
FIG. 14 is an explanatory view of a data structure of a program showing the state in which cell units are deleted according to the same;
FIG. 15 is an explanatory view of the data structure of a program showing a method for adding new cells to a program according to the same, wherein FIG. 15(a) shows the state prior to adding cells, and FIG. 15 (b) shows the state after adding cells; and
FIG. 16 is an explanatory view of the method for partially deleting the reference information of a video object within a cell according to the same.

### DETAILED DESCRIPTION OF THE PREFERRED EMBODIMENTS

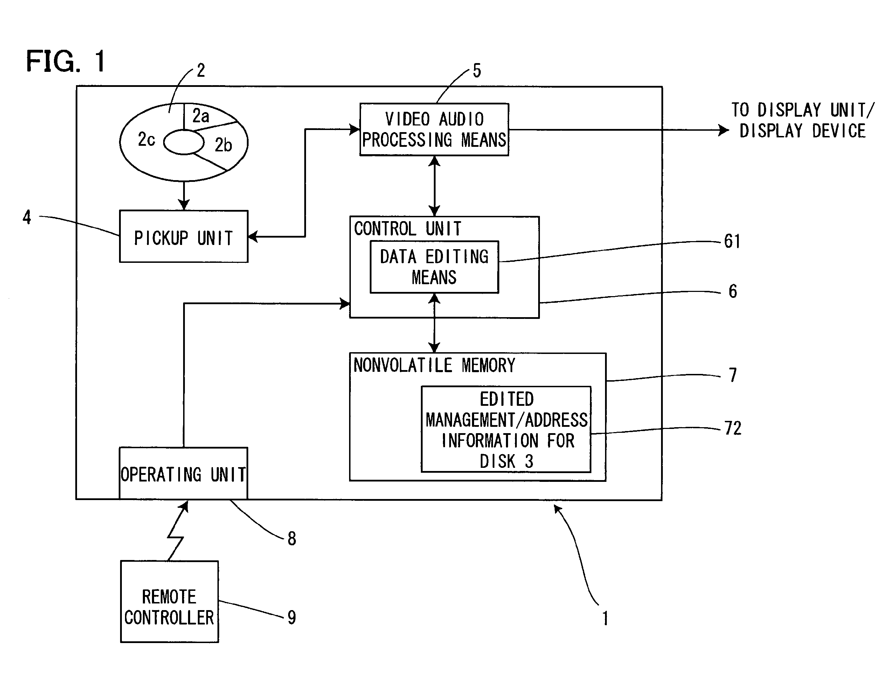

Now, the preferred embodiment for carrying out the present invention will be described with reference to FIGS. 1 through 16. Of course, the present invention can be applied to examples other than that described herein within the scope of the present invention.

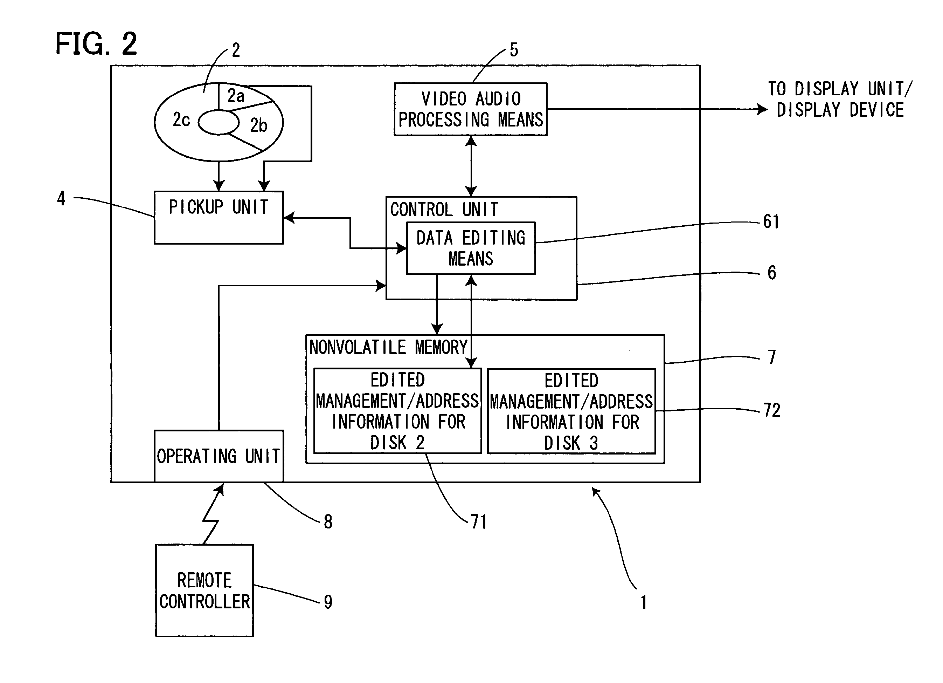

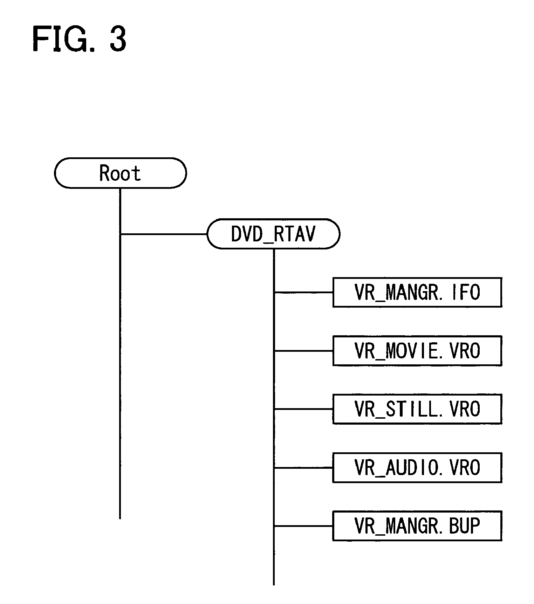

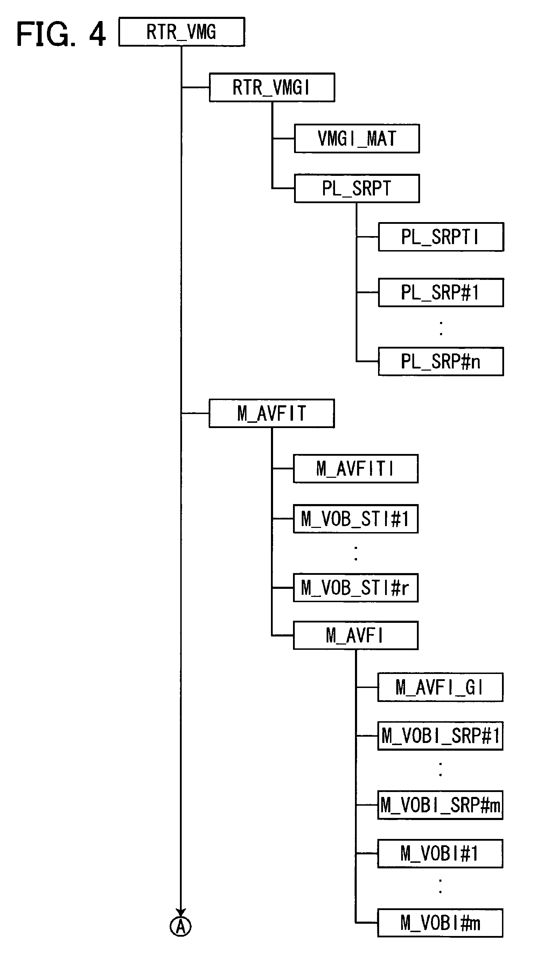

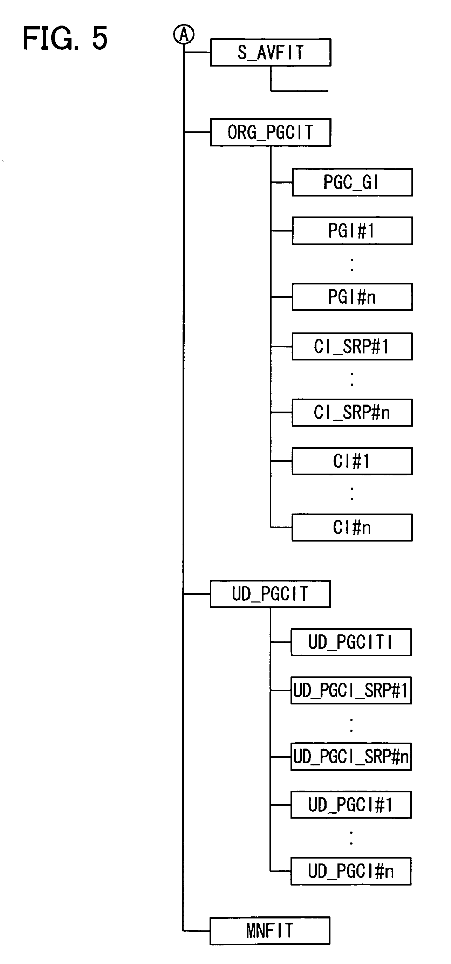

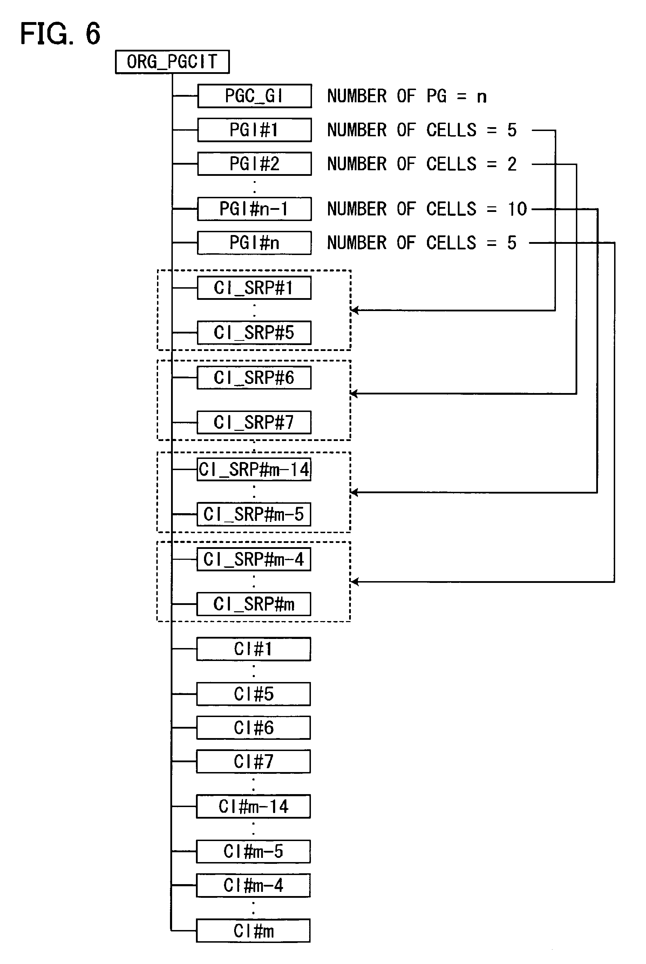

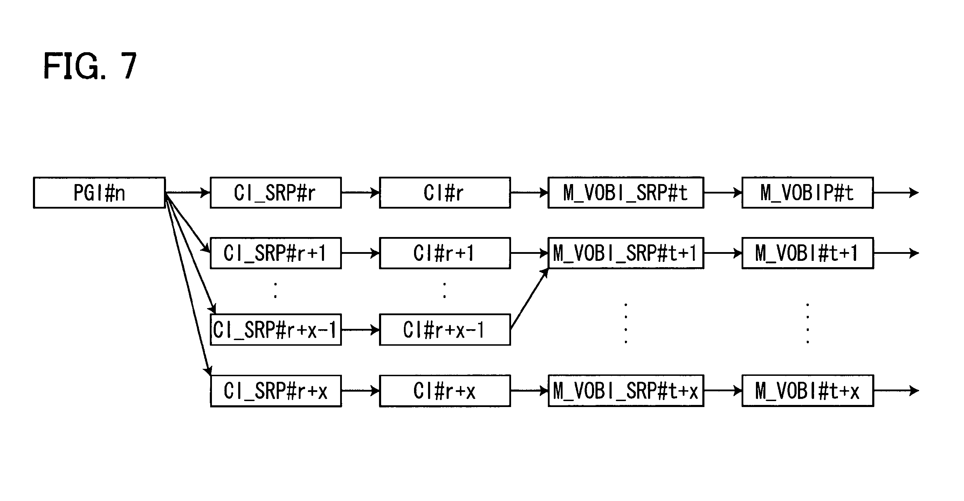

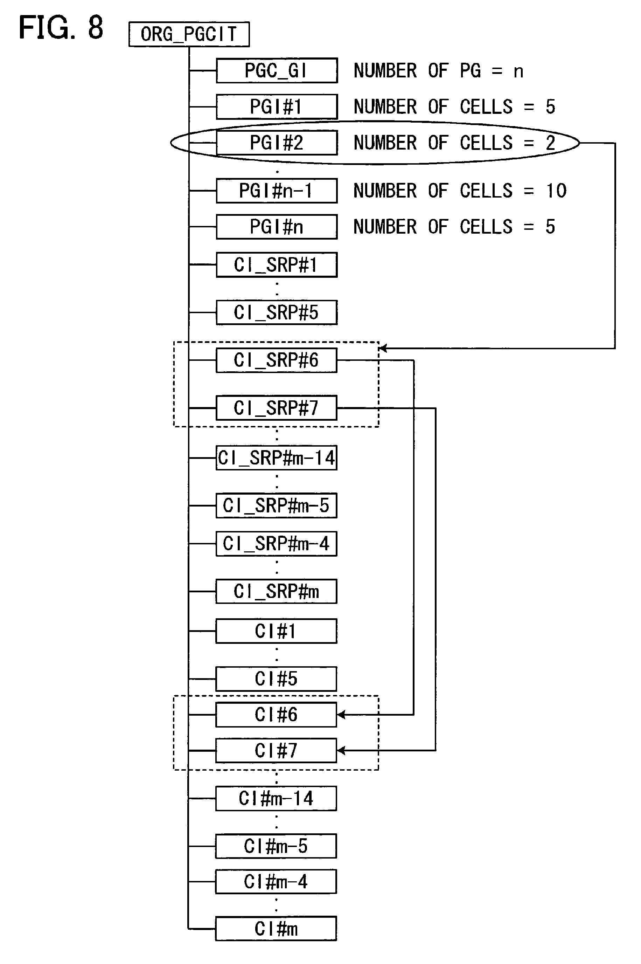

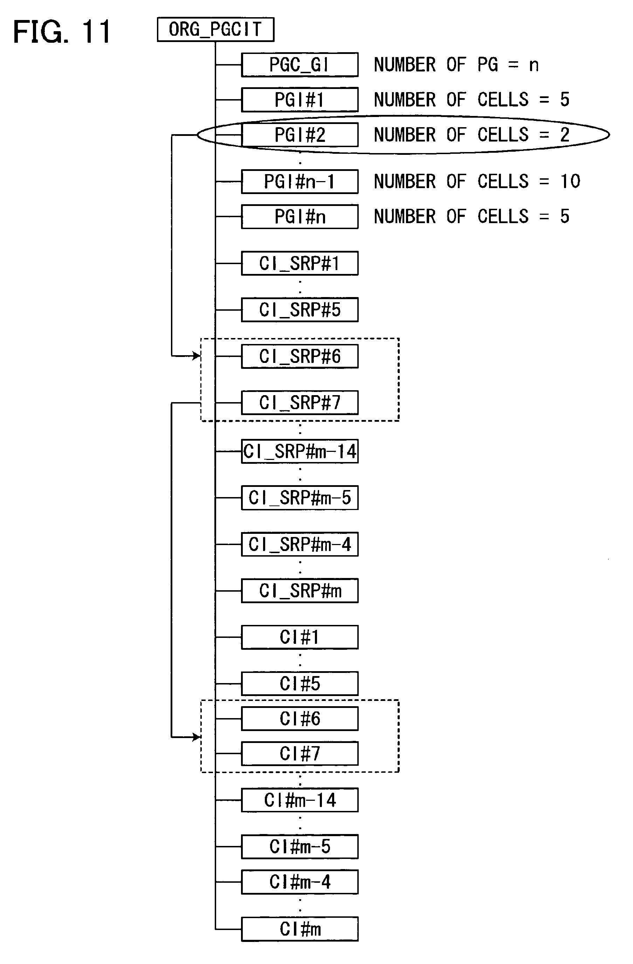

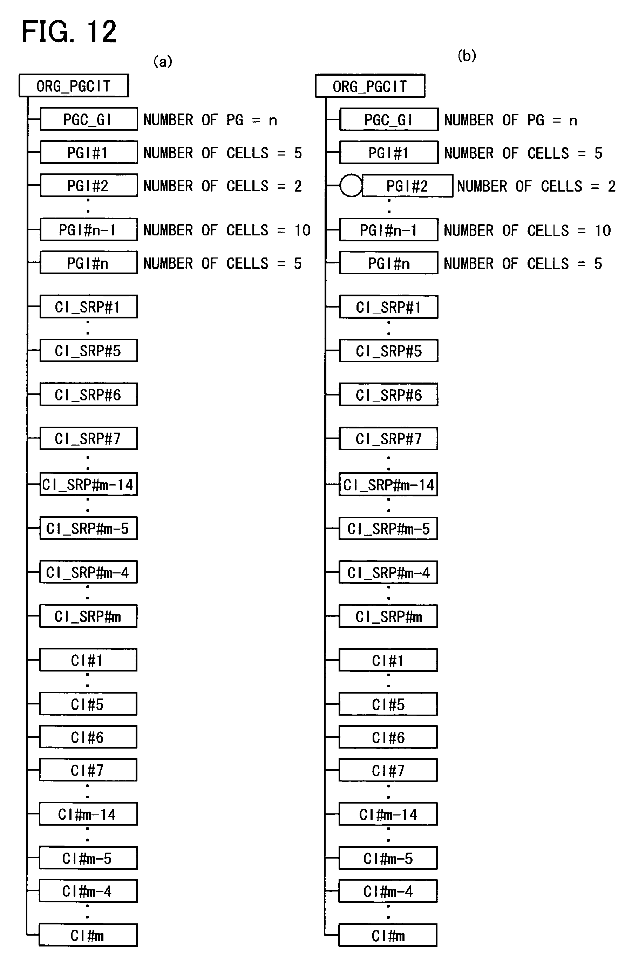

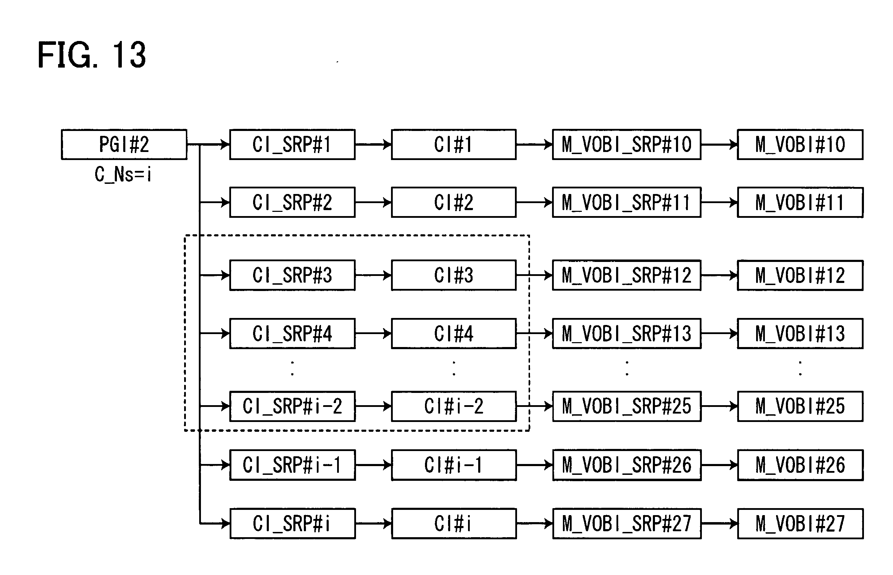

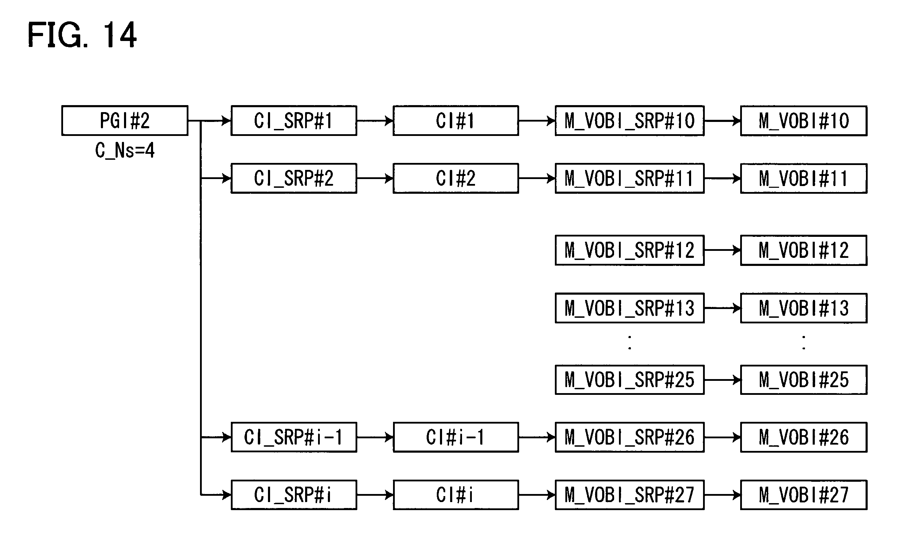

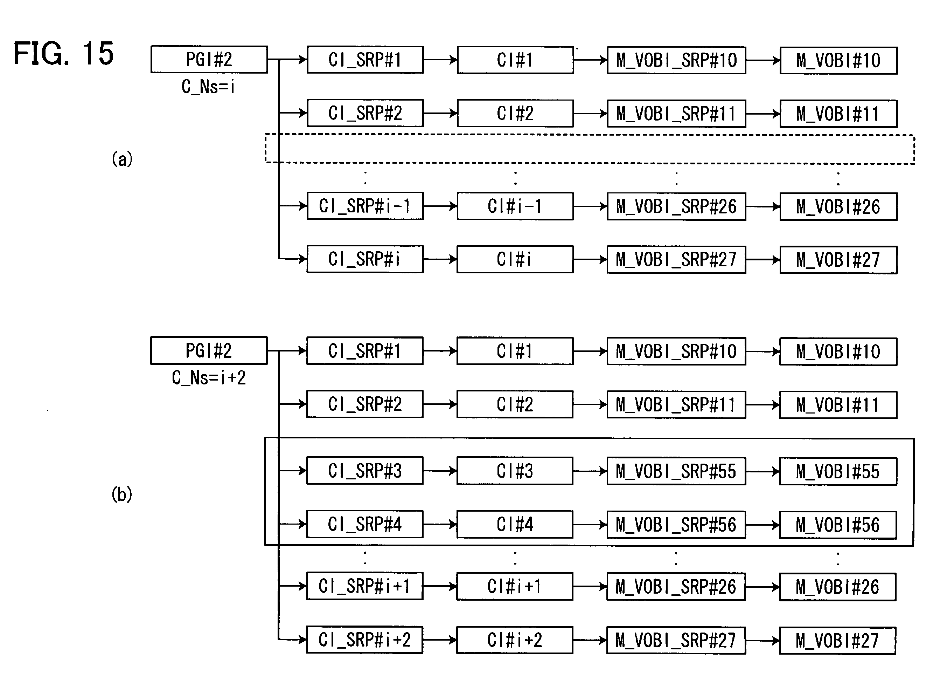

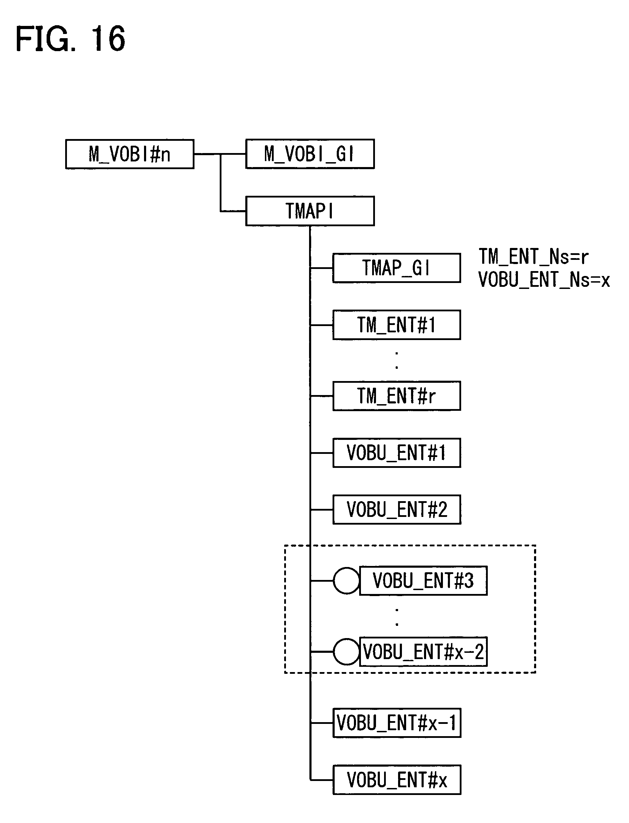

FIGS. 1 through 16 illustrate the preferred embodiment of the present invention, wherein FIGS. 1 and 2 are block diagrams showing the configuration of the optical disk reproducing apparatus, in which FIG. 1 shows the configuration for reproducing an unedited optical disk medium, and FIG. 2 shows the configuration for reproducing an edited optical disk medium. FIG. 3 is an explanatory view showing the directory structure for managing various information recorded in the optical disk medium. FIGS. 4 and 5 are explanatory views showing the data structure of management information stored in the optical disk medium. FIG. 6 is an explanatory view showing the data structure of an address reference information showing the reproducing order of content data stored in the optical disk medium. FIG. 7 is an explanatory view showing an address flow of the address reference information indicating the content data. FIGS. 8 through 10 are explanatory views showing a method for virtually deleting each title constituting a portion of the content data using the address information stored in a nonvolatile memory. FIG. 11 is an explanatory view showing a method for recording only differential data of the address reference information of the edited title to the nonvolatile memory. FIG. 12 is an explanatory view showing a method for providing a mark indicating that the address reference information corresponds to an edited title. FIGS. 13 and 14 are explanatory views showing a method for deleting cell units of a content data. FIG. 15 is an explanatory view showing a method for editing content data by inserting cells. FIG. 16 is an explanatory view showing a method for editing content data by units smaller than cells.

The configuration of the optical disk reproducing apparatus according to the present embodiment will be described with reference to FIGS. 1 and 2. FIG. 1 illustrates the configuration and operation of the optical disk reproducing apparatus when reproducing a content using the management information and address reference information stored in the optical disk medium, and FIG. 2 illustrates the configuration and operation of the optical disk reproducing apparatus when reproducing a content using the edited management information and address reference information stored in the nonvolatile memory provided in the apparatus. Reference number 1 denotes an optical disk reproducing apparatus. Reference number 2 denotes an optical disk medium storing contents composed of video and audio data, in which a management information 2a, an address reference information 2b and a video object 2c which is the content data are stored. Reference number 4 denotes a pickup unit which is a data acquisition means for reading the management information 2a, the address reference information 2b and the video object 2c stored in the optical disk medium 2, and reference number 5 denotes a video audio processing means for reproducing contents acquired via the pickup unit. Reference number 6 denotes a microcomputer which is a control unit, having a data editing means 61 for editing the reproducing order or the like of the video object 2c. Reference number 7 denotes a nonvolatile memory which is a nonvolatile storing means for storing the management information 2a and the address reference information 2b edited via a data editing means 61. Reference number 71 denotes an edited management information and address reference information of the optical disk medium 2 indicating the reproducing order of the video object 2c edited by the data editing means 61. Reference number 72 denotes an edited management information and address reference information of disk 3 having been edited with respect to a separate optical disk medium 3 not shown. Reference number 8 denotes an operating unit enabling the user to operate the optical disk reproducing apparatus 1, and reference number 9 denotes a remote controller for remotely operating the optical disk reproducing apparatus 1.

Next, the editing operation of the management information by the data editing means 61 is described with reference to FIGS. 3 through 16. FIG. 3 shows a directory structure of a VR format, which is one type of recording format of a DVD (digital versatile disk) which is an optical disk medium. A file containing contents and necessary settings for reproducing the contents are stored in a DVD_RTAV directory formed in the root directory. VR_MANGR.IFO is a management information file, VR_MOVIE.VRO is a file storing a video object 2c, VR_STILL.VRO is a still image recording file, VR_AUDIO.VRO is an audio file to be added to the still image, and VR_MANGR.BUP is a backup file for the aforementioned management information file.

FIGS. 4 and 5 show the structure of data stored in a VR_MANGR.IFO which is the management information file shown in FIG. 3. M_VOBI stores addresses and the like for accessing the actual contents such as video and audio, and stores address information such as M_VOB_GI (Movie VOB General Information) and TMAP (Time MAP) . Not all the data structures included in M_VOBI are illustrated in FIGS. 4, 5 and 16, and other information such as SMLI (Seamless Information) and AGAPI (Audio Gap Information) are included, but the information not related to the present invention are omitted. TMAP contained in M_VOBI include TM_ENT and VOBU_ENT. TM_ENT stores address of the time assigned at even intervals with respect to the VOBU containing the actual content data. There are a same number of VOBU_ENT as the number of VOBU actually reproduced, in which are stored the size and reproducing time or the like of VOBU. ORG_PGCIT stores information such as PGI (Program Information) and CI (Cell Information), and stores information related to titles and chapters and the names of titles which are units of a content such as a program or a movie. ORG_PGCIT stores PGC_GI, PGI, CI_SRP and CI. PGC_GI stores the number of programs and the number of cells. PGI is an information of each title, storing the number of cells (C_Ns) and the title of the program. CI_SRP stores the address of a single CI, and there are a same number of CI_SRP and CI. CI stores information such as the reproducing start time and reproducing end time of the cell, the position of chapters and the M_VOBI number, and by acquiring the M_VOBI number, it is possible to access the corresponding M_VOBI.

Next, the data structure of an ORG_PGCIT constituting an original title which is content stored in the DVD will be described with reference to FIG. 6. ORG_PGCIT is composed of, as shown in FIG. 6, PGC_GI (Program Chain General Information), PGI (Program Information), CI_SRP (Cell Information Search Pointer) and CI (Cell Information). A single original title is composed of a single program, and PGC_GI retains the total number of programs. PGI denotes the individual programs, and the number of PGI corresponds to the number of total programs defined in PGC_GI. PGI is composed of a set of data called a plurality of cells, and each PGI is correlated with a CI_SRP for accessing the cells. For example, when assuming that there are n numbers of PGI and m number of CI_SRP (wherein the nth PGI is denoted as PGI#n and the mth CI_SRP is denoted as CI_SRP#m), and that PGI#1 contains five cells, PGI#2 contains two cells, PGI#n-1 contains 10 cells, and PGI#n contains five cells, then CI_SRP#1 through CI_SRP#5 are cells constituting PGI#1, and CI_SRP#6 and CI_SRP#7 are cells constituting PGI#2. Subsequently, as shown in FIG. 6, each PGI is composed of one or more CI_SRP denoted by an arrow and surrounded by dashed lines. Each CI_SRP is correlated with a unique CI, and CI contains address reference information 2b for accessing the video object 2c.

Next, a case in which a PGI denoting a specific program accesses the video object 2c will be described with reference to FIG. 7. When assuming that the nth PGI or PGI#n is composed of the rth to r+xth CI_SRP, the address flow for accessing the video object 2c from the PGI#n is as shown in FIG. 7. M_VOBI_SRP (Movie VOB Information Search Pointer) can be acquired by accessing CI. The address of M_VOBI (Movie VOB Information) can be acquired from M_VOBI_SRP, and the information required for accessing the video object 2c is acquired from M_VOBI. As described above, in order to access the video object 2c, it is necessary to sequentially access address information in the following order; PGI, CI_SRP, CI, M_VOBI_SRP and M_VOBI. However, CI and M_VOBI_SRP are not necessary in a one-to-one relationship, and there are cases in which a plurality of CIs access a single M_VOBI_SRP.

The contents can be edited, that is, the access order of the video object 2c can be changed by deleting or changing the CI_SRP and CI, or newly inserting CI_SRP and CI denoting a M_VOBI_SRP for accessing the video object 2c that the user desires in the sequence of CI_SRP and CI.

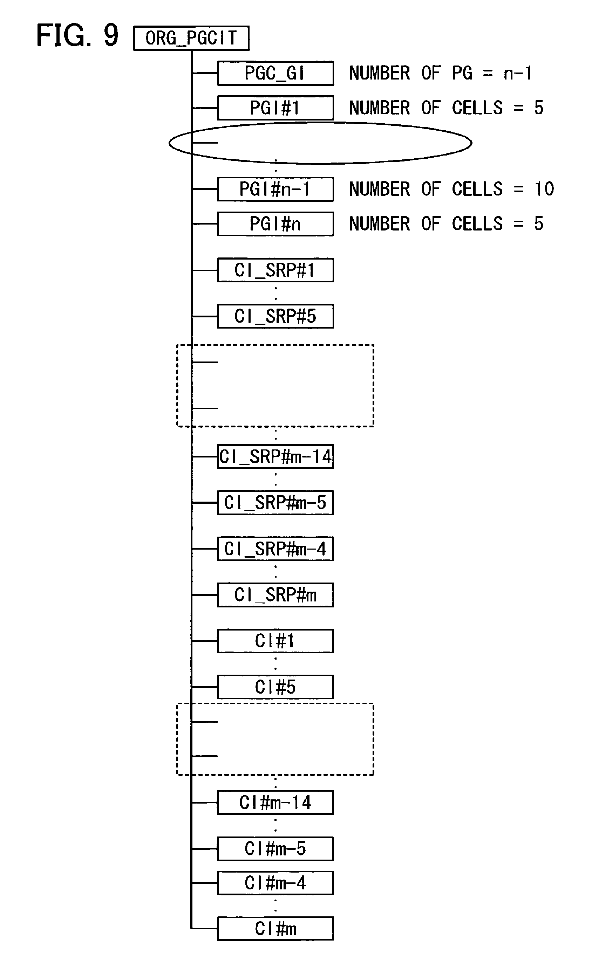

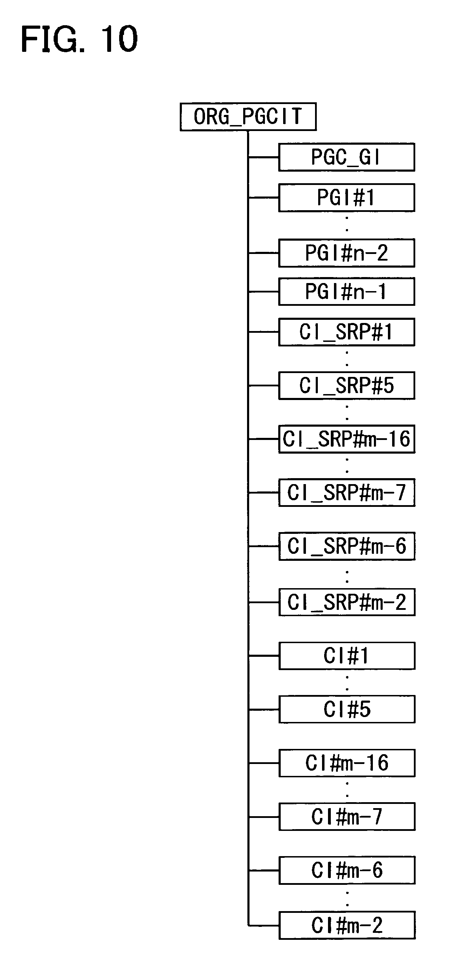

Next, the operation of a data editing means 61 for deleting program units is described with reference to FIGS. 8 to 10, taking as an example a case for deleting PGI#2 from the data structure of the address reference information illustrated in FIG. 6. When the user wishes to delete program PGI#2, as shown in FIG. 8, PGI#2 is correlated with two cells, and the PGI immediately prior thereto is correlated with five cells in total, so the CI_SRP correlated with PGI#2 are #6 and #7. CI_SRP#6 and CI_SRP#7 each refer to CI#6 and CI#7, so as illustrated in FIG. 9, PGI#2, CI_SRP#6, CI_SRP#7, CI#6 and CI#7 are deleted from the data editing means 61. Thereafter, rearrangement is performed as shown in FIG. 10, which is stored in the nonvolatile memory 7. Thus, the user can delete the desired program by deleting the reference to the corresponding portion, without physically eliminating the video object 2c.

Other than the aforementioned method for deleting a program, it is possible to reproduce a content after a desired program has been deleted by the user, by storing the program to be deleted PGI#2 and the correlated CI_SRP#6 and 7 and CI#6 and CI#7 as differential data in the nonvolatile memory 7, and upon reproducing the optical disk medium 2, reflecting the differential data stored in the nonvolatile memory 7 to the address reference information 2b, as shown in FIG. 11. Furthermore, it is also possible to provide information to the program to be deleted indicating that the program has been deleted, as shown in FIG. 12, and skipping the reproduction of that certain program when the delete information is detected during reproduction of a content.

Next, a method for deleting cell units is described with reference to FIGS. 13 and 14. It is assumed that the program containing the cell to be deleted is PGI#2, and that PGI#2 contains i number of cells. PGI stores the number of cells contained in a program as C_Ns, so when deleting a cell, it is necessary to re-record the number of cells having deleted a cell as C_Ns. As shown in FIG. 13, if the user wishes to delete cells surrounded by the dashed line, the remaining number of cells is four, so C_Ns=4 is recorded, as shown in FIG. 14, and the CI_SRP and CI surrounded by the dashed line is deleted and stored in the nonvolatile memory 7 as edited address reference information.

Next, a method for adding cells to a program is described with reference to FIG. 15. FIG. 15(a) shows the status of the program prior to adding cells, wherein the number of cells C_Ns is i. When the user wishes to insert two video objects denoted by M_VOBI_SRP#55 and M_VOBI#55, and M_VOBI_SRP#56 and M_VOBI#56 to the area surrounded by the dashed line, two new cells are added and C_Ns is corrected to i+2, as shown in FIG. 15(b).

Next, an example for editing the content of a cell is described with reference to FIG. 16. It is possible to acquire M_VOBI denoting the address of a video object based on M_VOBI_SRP indicated by CI, and M_VOBI has a data structure as shown in FIG. 16. M_VOBI stores M_VOBI_GI (M_VOBI General Information) recording information such as reproducing start time and reproducing end time, and TMAPI (Time MAP Information). TMAPI is composed of TMAP_GI (TMAP General Information), TM_ENT (Time Map Entry) and VOBU_ENT (VOBU Entry). TMAP_GI stores TM_ENT_Ns showing the number of TM_ENT, and VOBU_ENT_Ns storing the number of VOBU_ENT. VOBU_ENT stores address reference information for accessing a VOBU containing usually 0.4 to 1.0 seconds of video/audio data. In order to delete a desired video/audio data, information showing that the VOBU_ENT is deleted is added to the VOBU_ENT to be deleted, and when the delete information is detected during reproducing operation, the reproduction of a VOBU denoted by the corresponding VOBU_ENT is skipped.

As described, by editing the address reference information via the data editing means 61 and storing the same in a nonvolatile memory 7, the next time the optical disk medium 2 having been edited is set, the reproduction of contents is performed not based on the management information 2a and address reference information 2b stored in the optical disk medium 2 but based on the edited management information and address reference information 71 of the disk 2 stored in the nonvolatile memory 7, so that it becomes possible to edit an optical disk medium that disables additional recording or changing of data, and the user is enabled to edit the desired contents even in an optical disk reproducing apparatus having no recording editing function.

## Claims

1. An optical disk reproducing apparatus having a content editing function comprising:
a disk unit for reading or reading and writing data on an optical disk medium storing one or more content data, a management information including a title menu of the content data, and an address reference information designating a given point of the content data;
a data acquisition means for acquiring the management information, the content data and the address reference information stored in the optical disk medium set in the disk apparatus;
a data editing means for performing editing operation of the acquired management information, content data and address reference information; and
a nonvolatile recording means for recording the management information and the address reference information edited by the data editing means;
wherein the data editing means edits the address reference information acquired by the data acquisition means so as to change a reproducing order of the content data or partially delete the content data, and stores the edited address reference information to the nonvolatile storage means, so that when the optical disk medium is reproduced after the editing operation, the reproducing order of the content data is determined by the reproducing order according to the edited address reference information stored in the nonvolatile storage means.

2. The optical disk reproducing apparatus having a content editing function according to claim 1, wherein the data editing means stores a copy of the address reference information to the nonvolatile recording means upon editing the address reference information stored in the optical disk medium, and performs editing operation of the copy of the address reference information.

3. The optical disk reproducing apparatus having a content editing function according to claim 1 or claim 2, wherein the data editing means stores the difference between the address reference information stored in the optical disk medium and the edited address reference information to the nonvolatile storage means.
